Europäisches Patentamt

European Patent Office

Office européen des brevets

(11) Veröffentlichungsnummer: **0 034 252**
A1

# (12) EUROPÄISCHE PATENTANMELDUNG

(21) Anmeldenummer: **81100224.5**

(22) Anmeldetag: **14.01.81**

(51) Int. Cl.³: **C 08 L 69/00**
**C 08 L 55/02, C 08 K 3/18**

(30) Priorität: **25.01.80 DE 3002662**

(43) Veröffentlichungstag der Anmeldung:
**26.08.81 Patentblatt 81/34**

(84) Benannte Vertragsstaaten:
**DE FR GB IT NL SE**

(71) Anmelder: **BAYER AG**
**Zentralbereich Patente, Marken und Lizenzen**
**D-5090 Leverkusen 1, Bayerwerk(DE)**

(72) Erfinder: **Margotte, Dieter, Dr.**
**Wedelstrasse 48**
**D-4150 Krefeld 1(DE)**

(72) Erfinder: **Peters, Horst, Dr.**
**Winterberg 25**
**D-5090 Leverkusen 3(DE)**

(72) Erfinder: **Buekers, Josef**
**Kneinstrasse 58a**
**D-4150 Krefeld 1(DE)**

(54) Flammwidrige thermoplastische Formmassen aus Polycarbonaten und ABS-Polymerisaten.

㊼ Die Erfindung betrifft flammwidrige thermoplastische Formmassen aus
1.5 bis 95 Gew.-Tln eines aromatischen Polycarbonats; 2. 95 bis 5 Gew.-Tln eines ABS-Polymerisats; 3,3 bis 15 Gew.-Tln, pro 100 Gew.-Tle des Gemisches aus aromatischem Polycarbonat und ABS-Polymerisat, einer gegebenenfalls in das aromatische Polycarbonat einkondensierten flammwidrigen organischen Halogenverbindung, und 4. 0,5 bis 5 Gew.-Tln, pro 100 Gew.-Tle des Gemisches aus aromatischem Polycarbonat und ABS-Polymerisat, Wismuttrioxid oder Wismutcarbonat.

EP 0 034 252 A1

BAYER AKTIENGESELLSCHAFT      5090 Leverkusen-Bayerwerk

Zentralbereich      G/bc/c

Patente Marken und Lizenzen

Flammwidrige thermoplastische Formmassen aus Polycarbonaten und ABS-Polymerisaten

Thermoplastische Mischungen aus Polycarbonaten auf Basis aromatischer Dihydroxyverbindungen und ABS-Polymerisaten sind grundsätzlich bekannt (DE-PS 1 170 141 und DE-AS 1 810 993). Mischungen aus aromatischen Polycarbonaten mit speziellen ABS-Systemen werden in den DE-PS 2 259 656, DE-OS 2 329 548 und DE-OS 2 329 546 beschrieben.

Außer an die technologischen Eigenschaften werden in steigendem Maße erhöhte Anforderungen an die Brandwidrigkeit von thermoplastischen Kunststoffen gestellt. So wird z.B. für viele Anwendungen die Klasse VO nach UL Subj. 94 bei 3,2 und 1,6 mm Wandstärke gefordert. Eine Verbesserung der Flammwidrigkeit von thermoplastischen Kunststoffen läßt sich durch Einbau oder Zusatz von Halogenverbindungen, gegebenenfalls in Kombination mit Flammschutzsynergisten erreichen.

Für ABS-Kunststoffe können organische Bromverbindungen wie z.B.

Hexachlorcyclopentadien

Hexabromdiphenyl

Octabromdiphenyloxid

Tribromphenoxymethan

Decabromdiphenyl

Decabromdiphenyloxid

Octabromdiphenyloxid

Bis(2,4,6-Tribromphenyl)carbonat

Tetrabromphthalimid

Hexabrombuten

Trichlortetrabromtoluol

Pentabromphenylbenzoat

Tris-tribromphenyl-triphosphat

Hexabromcyclododecan

gegebenenfalls in Kombination mit Antimontrioxid als Synergisten eingesetzt werden. Bei den thermoplastischen Mischungen aus aromatischen Polycarbonaten und ABS-Polymerisaten kann das Flammschutzmittel ebenfalls zugemischt werden. Flammschutz kann aber auch durch Einkondensation von halogenhaltigen Bisphenolen (Tetrabrombisphenol A) in das aromatische Polycarbonat erzielt werden.

Mischungen aus aromatischen Polycarbonaten mit ABS-Polymerisaten, die durch die genannten Flammschutzmittel in Kombination mit Antimontrioxid flammwidrig ausgerüstet wurden, zeigen häufig, besonders bei höheren Verarbeitungstemperaturen (z.B. oberhalb von 290°C) oder bei der Herstellung großflächiger Teile, Oberflächenstörungen in Form von Bläschen oder

Le A 20 138

Schlieren, die wahrscheinlich auf eine Schädigung des
Polycarbonats durch Antimontrioxid zurückzuführen sind.

Dieser Effekt verschwindet, wenn man Wismuttrioxid
oder Wismutcarbonat als Flammschutzsynergisten verwendet. Dies ist überraschend, weil bekanntlich andere Oxide wie z.B. MgO, ZnO, $Fe_2O_3$ oder CdO usw. keine
synergistische Flammschutzwirkung zeigen.

Gegenstand der Erfindung sind flammwidrige thermoplastische Formmassen aus

1. 5 bis 95 Gew.-Teilen eines aromatischen Polycarbonats,

2. 95 bis 5 Gew.-Teilen eines ABS-Polymerisats,

3. 3 bis 15 Gew.-Teilen pro 100 Gew.-Teile des Gemisches aus aromatischem Polycarbonat und ABS-
   Polymerisat einer gegebenenfalls in das aromatische Polycarbonat einkondensierten flammwidrigen
   organischen Halogenverbindung und

4. 0,5 bis 5 Gew.-Teile pro 100 Gew.-Teile des Gemisches aus aromatischem Polycarbonat und ABS-
   Polymerisat, Wismuttrioxid oder Wismutcarbonat.

Aromatische Polycarbonate im Sinne der Erfindung sind
Homopolycarbonate und Copolycarbonate aus einem
oder mehreren der folgenden Diphenole:

Le A 20 138

Hydrochinon

Resorcin

Dihydroxydiphenyle

Bis-(hydroxyphenyl)-alkane

Bis-(hydroxyphenyl)-cycloalkane

Bis-(hydroxyphenyl)-sulfide

Bis-(hydroxyphenyl)-ether

Bis-(hydroxyphenyl)-ketone

Bis-(hydroxyphenyl)-sulfoxide

Bis-(hydroxyphenyl)-sulfone

$\alpha,\alpha'$-Bis-(hydroxyphenyl)-diisopropylbenzole,

wobei die Phenylreste auch Alkyl- oder Halogensubstituenten tragen können. Diese und weitere geeignete Diphenole sind z.B. in den US-Patentschriften 3 028 365, 2 999 835, 3 148 172, 3 275 601, 2 991 273, 3 271 367, 3 062 781 und 2 999 846, in den deutschen Offenlegungsschriften 1 570 703, 2 063 050, 2 063 052, 2 211 956, 2 211 957, der französischen Patentschrift 1 561 518 und der Monographie "H. Schnell, Chemistry and Physics of Polycarbonates, Interscience Publishers, New York, 1964", beschrieben.

Bevorzugte Diphenole sind:

4,4'-Dihydroxydiphenyl

2,2-Bis-(4-hydroxyphenyl)-propan

2,4-Bis-(4-hydroxyphenyl)-2-methylbutan 1,1-Bis-(4-hydroxyphenyl)-cyclohexan

$\alpha,\alpha'$-Bis-(4-hydroxyphenyl)-p-diisopropylbenzol

2,2-Bis-(3-methyl-4-hydroxyphenyl)-propan

Le A 20 138

0034252

2,2-Bis-(3-chlor-4-hydroxyphenyl)-propan

Bis-(3,5-dimethyl-4-hydroxyphenyl)-methan

2,2-Bis-(3,5-dimethyl-4-hydroxyphenyl)-propan

Bis-(3,5-dimethyl-4-hydroxyphenyl)-sulfon

2,4-Bis-(3,5-dimethyl-4-hydroxyphenyl)-2-methylbutan

1,1-Bis-(3,5-dimethyl-4-hydroxyphenyl)-cyclohexan

$\alpha,\alpha$'-Bis-(3,5-dimethyl-4-hydroxyphenyl)-p-diisopropyl-benzol

2,2-Bis-(3,5-dichlor-4-hydroxyphenyl)-propan

2,2-Bis-(3,5-dibrom-4-hydroxyphenyl)-propan.


Besonders bevorzugte Diphenole sind z.B.:


2,2-Bis-(4-hydroxyphenyl)-propan

2,2-Bis-(3,5-dimethyl-4-hydroxyphenyl)-propan

2,2-Bis-(3,5-dichlor-4-hydroxyphenyl)-propan

2,2-Bis-(3,5-dibrom-4-hydroxyphenyl)-propan

1,1-Bis-(4-hydroxyphenyl)-cyclohexan.


Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenol)-propan.


Die aromatischen Polycarbonate können nach bekannten Verfahren hergestellt werden, z.B. einer Schmelzum-


Le A 20 138

esterung aus Bisphenol und Diphenylcarbonat und in Lösung aus Bisphenolen und Phosgen. Die Lösung kann homogen sein ("Pyridinverfahren") oder heterogen ("Zweiphasengrenzflächenverfahren"). Erfindungsgemäß sind Polycarbonate, die in Lösung, insbesondere nach dem Zweiphasengrenzflächenverfahren hergestellt worden sind, besonders geeignet.

Die aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, z.B. solchen mit drei oder mehr als drei phenolischen Hydroxygruppen verzweigt sein.

Die aromatischen Polycarbonate sollen in der Regel mittlere Gewichtsmittel-Molekulargewichte $\bar{M}_w$ von 10 000 bis über 200 000, vorzugsweise von 20 000 bis 80 000 haben (ermittelt durch Messungen der rel. Viskosität in $CH_2Cl_2$ bei 25°C bei einer Konzentration von 0,5 Gew.-%).

ABS-Polymerisate im Sinne der Erfindung sind Mischungen aus

(2.1)  25 bis 100 Gew.-Teilen eines Pfropfmischpolymerisats;

(2.2)   0 bis  20 Gew.-Teilen eines Butadienpolymerisats;

(2.3)   0 bis  75 Gew.-Teilen eines Copolymerisats auf Basis Styrol.

Le A 20 138

Insbesondere sind die Pfropfmischpolymerisate (2.1)
solche, in denen auf einen Kautschuk eine Monomerenmischung von 95 bis 50 Gew.-% Styrol, Methylmethacrylat oder Mischungen daraus und 5 bis 50 Gew.-%
Acrylnitril, Methylmethacrylat oder Mischungen
daraus pfropfpolymerisiert ist. Geeignete Kautschuke
sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines
niederen Alkylesters von Acryl- oder Methacrylsäure
(z.B. Methylacrylat, Ethylacrylat, Methylmethacrylat und Ethylmethacrylat), prinzipiell sind alle
elastifizierenden Komponenten geeignet, sofern sie
ein kautschukelastisches Verhalten zeigen.

Die Butadienpolymerisate (2.2), die in den Formmassen
enthalten sein können, sind bevorzugt Copolymerisate
von 5 bis 95 Gew.-% Butadien und 95 bis 5 Gew.-%
Styrol, Acrylnitril, Acrylsäure, Methacrylsäure,
$C_1$-$C_6$-Alkylester der Acryl- oder Methacrylsäure
(besonders bevorzugt Methylmethacrylat), Divinylbenzol und Mischungen dieser Comonomeren. Insbesondere sind geeignet Copolymerisate aus 70 bis
90 Gew.-% Butadien und 30 bis 10 Gew.-% Styrol,
Copolymerisate aus 60 bis 95 Gew.-% Butadien und
40 bis 5 Gew.-% Methylmethacrylat, Copolymerisate
von 30 bis 95 Gew.-% Butadien und 70 bis 5 Gew.-%
Acrylsäurebutylester, sowie Copolymerisate aus
60 bis 80 Gew.-% Butadien und 40 bis 20 Gew.-%
Acrylnitril.

Le A 20 138

In diesen letzten Copolymerisaten können auch noch zusätzlich kleinere Mengen (bis etwa insgesamt 10 %) Methacrylsäure und/oder Divinylbenzol einpolymerisiert sein. Beispiele für Ter- bzw. Quarterpolymerisate der letztgenannten Art sind Copolymerisate aus 63 % Butadien, 34 % Acrylnitril und 3 % Methacrylsäure, oder Copolymerisate aus 60 Gew.-% Butadien, 36 Gew.-% Acrylnitril, 3 % Methacrylsäure und 1 % Divinylbenzol.

Die Copolymerisate (2.3) können aus den Pfropfmonomeren oder ähnlichen Monomeren aufgebaut sein. Es handelt sich bevorzugt um Copolymerisate aus 95 bis 50 Gew.-% Styrol, $\alpha$-Methylstyrol, Methylmethacrylat oder Mischungen daraus mit 5 bis 50 Gew.-% Acrylnitril, Methacrylnitril, Methylmethacrylat oder Mischungen daraus. Solche Copolymeren entstehen häufig bei der Pfropfmischpolymerisation als Nebenprodukte, besonders dann, wenn große Mengen Monomerer auf kleine Mengen Kautschuk gepfropft werden. Es ist dabei möglich, neben oder anstelle der so entstandenen Copolymeren noch getrennt hergestellte Copolymere dieser Art zuzumischen.

Organische flammhemmende Halogenverbindungen im Sinne der Erfindung sind z.B.:

Decabromdiphenylether
Octabromdiphenyl
Octabromdiphenylether
Trichlortetrabromtoluol
flammwidrig ausgerüstete Polycarbonate sind z.B. solche, die 5-20 Mol % Tetrabrombisphenol A oder Tetrachlorbisphenol A einkondensiert enthalten.

Le A 20 138

Die Flammschutzmittel, die gegebenenfalls in Polycarbonat einkondensiert sein können, werden im allgemeinen in Mengen von 3 bis 15 Gew.-Teilen, bevorzugt 5 bis 10 Gew.-Teilen pro 100 Gew.-Teile des Gemischs aus aromatischem Polycarbonat und ABS-Polymerisat eingesetzt.

Wismuttrioxid oder Wismutcarbonat wird im allgemeinen in Mengen von 0,5 bis 5 Gew.-Teilen pro 100 Gew.-Teile des Gemischs aus aromatischem Polycarbonat und ABS-Polymerisat eingesetzt, bevorzugt in Mengen von 1 bis 4 Gew.-Teilen, insbesondere von 1 bis 3 Gew.-Teilen.

Die erfindungsgemäßen flammwidrig eingestellten Formmassen können durch Vermischen der Einzelkomponenten erhalten werden. In einer bevorzugten Herstellungsmethode werden zunächst die Latices des Pfropfpolymerisats (2.1) und gegebenenfalls die des Butadienpolymerisats (2.2) und des Copolymerisats (2.3) gemischt und die Feststoffe gemeinsam ausgefällt und getrocknet. Die so erhaltene Pulvermischung wird dann mit dem Polycarbonat, Flammschutzmittel und Wismuttrioxid abgemischt. Die Einzelkomponenten der erfindungsgemäßen Formmassen können aber auch getrennt hergestellt und dann auf bekannten Mischvorrichtungen gemischt werden. Geeignet sind hierfür z.B. Mischwalzwerke, Schneckenextruder oder Innenmischer.

Entweder enthalten die Einzelkomponenten der erfindungsgemäßen Formmassen Zusätze wie Stabilisatoren, Flammschutzmittel, Pigmente, Fließmittel, Gleitmittel, Entformungsmittel, Antistatika oder bei der Vermischung der Einzelkomponenten können die obengenannten Zusätze zugefügt werden.

Le A 20 138

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind:

Gehäuseteile jeder Art (z.B. für Haushaltsgeräte wie Saftpressen, Kaffeemaschinen, Mixer) oder Abdeckplatten für den Bausektor und Teilen für den Kfz-Sektor. Sie werden außerdem auf dem Gebiet der Elektrotechnik eingesetzt, weil sie sehr gute elektrische Eigenschaften haben. Eine weitere Form der Verarbeitung ist die Herstellung von Formkörpern durch Tiefziehen aus vorher hergestellten Platten oder Folien.

Für die Beispiele wurden folgende Polycarbonate verwendet:

1.  <u>Polycarbonat A</u>

    Polycarbonat auf Basis von Bisphenol A mit einer relativen Lösungsviskosität von 1,295 (gemessen in Methylenchlorid bei 25°C und einer Konzentration von 5 g/l).

2.  <u>Polycarbonat B</u>

    Ein Copolycarbonat bestehend aus 90 Mol-% Bisphenol A und 10 Mol-% Tetrabrombisphenol A mit einer relativen Lösungsviskosität von 1,230.

<u>Le A 20 138</u>

Als ABS-Komponenten wurden eingesetzt:

ABS-Polymerisat A:

a) 60 Gew.-Teile eines Pfropfpolymerisats, hergestellt durch Pfropfung von 35 Gew.-Teilen Styrol und 15 Gew.-Teilen Acrylnitril auf 50 Gew.-Teile eines grobteiligen Polybutadiens (gem. den Angaben der DE-AS 1 247 665 und 1 269 360 über eine Emulsionspolymerisation), wobei der mittlere Teilchendurchmesser der in Latexform vorliegenden Polybutadienpfropfgrundlage zwischen 0,3 und 0,4 $\mu$ liegt, und

b) 40 Gew.-Teile eines Styrol-Acrylnitril-Copolymerisats mit einem Styrol-Acrylnitril-Verhältnis von 70:30 und einer Grenzviskosität von $[\eta] = 79,1$ (Messung in Dimethylformamid bei 20°C).

ABS-Polymerisat B:

a) 70 Gew.-Teile eines Pfropfpolymerisats, hergestellt durch Pfropfung von 35 Gew.-Teilen Styrol und 15 Gew.-Teilen Acrylnitril auf 50 Gew.-Teile eines feinteiligen Polybutadiens mit einem mittleren Teilchendurchmesser von 0,05 bis 0,15$\mu$ und

b) 30 Gew.-Teilen eines Copolymerisats aus Styrol-Acrylnitril im Verhältnis 70:30 mit einer Grenzviskosität von $[\eta] = 80,9$.

Le A 20 138

Die Formmassen der folgenden Beispiele wurden auf einem Innenkneter bei ca. 240°C bzw. in einem Doppelwellenextruder bei ca. 260°C durch Vermischen der Einzelkomponenten (ABS-Polymerisat, Flammschutzmittel, Wismuttrioxid) hergestellt.

Die Eigenschaften der Formmassen wurden nach folgenden Methoden bestimmt:

1. Kerbschlagzähigkeit nach DIN 53 453 bei Raumtemperatur. Die Prüfkörper wurden bei den angegebenen Massetemperaturen auf Schneckenspritzgießmaschinen hergestellt.

2. Die optische Beurteilung erfolgte an spritzgegossenen Musterplatten (60x40x2 mm). Zugrundegelegt wurde eine Bewertungsskala von 1 bis 7. Hierin bedeutet 1 einwandfreie Oberfläche, 3 bis 4 geringfügige, vertretbare Oberflächenstörungen, 7 starke Schlieren.

3. Brandverhalten nach UL-Subs. 94 bei den Prüfkörperdicken von 3,2 und 1,6 mm.

Le A 20 138

| Beispiel | 1 Vergleichsbeisp. | 2 Vergleichsbeisp. | 3 | 4 | 5 | 6 | 7 |
|---|---|---|---|---|---|---|---|
| Polycarbonat A | 50 | – | 50 | – | 60 | – | 30 |
| Polycarbonat B | – | 70 | – | 70 | – | 50 | 20 |
| ABS-Polymerisat A | 40 | 28 | 40 | 28 | – | 42 | – |
| ABS-Polymerisat B | – | – | – | – | 30 | – | 41 |
| Decabromdiphenylether | 8 | – | 8 | – | – | – | – |
| Octabromdiphenyl | – | – | – | – | 8 | 6 | 7 |
| Antimontrioxid | 2 | 2 | – | – | – | – | – |
| Wismuttrioxid | – | – | 2 | 2 | 2 | 2 | 2 |
| Kerbschlagzähigkeit kJ/m$^2$ [1] | 25 | 30 | 24 | 32 | 24 | 22 | 19 |
| optische Beurteilung nach | | | | | | | |
| Spritzguß 260°C | 1 | 1 | 1 | 1 | 1 | 1 | 1 |
| 270°C | 2 | 1 | 1 | 1 | 1 | 1 | 1 |
| 280°C | 3 | 3 | 1 | 2 | 1 | 1 | 2 |
| 290°C | 5 | 4 | 2 | 2 | 3 | 2 | 2 |
| Brandverhalten nach UL | | | | | | | |
| UL Subs. 94 bei 1,6 mm | VO | VO | VO | VO | VO | VO | VO |
| 3,2 mm | VO | VO | VO | VO | VO | VO | VO |

1) DIN 53453

- 13 -

<u>Patentanspruch</u>

Flammwidrige thermoplastische Formmassen aus

1. 5 bis 95 Gew.-Teilen eines aromatischen Polycarbonats,

2. 95 bis 5 Gew.-Teilen eines ABS-Polymerisats,

3. 3 bis 15 Gew.-Teilen pro 100 Gew.-Teile des Gemisches aus aromatischem Polycarbonat und ABS-Polymerisat einer gegebenenfalls in das aromatische Polycarbonat einkondensierten flammwidrigen organischen Halogenverbindung und

4. 0,5 bis 5 Gew.-Teilen pro 100 Gew.-Teile des Gemisches aus aromatischem Polycarbonat und ABS-Polymerisat, Wismuttrioxid oder Wismutcarbonat.

Le A 20 138

**Europäisches Patentamt**

**EUROPÄISCHER RECHERCHENBERICHT**

## EINSCHLÄGIGE DOKUMENTE

| Kategorie | Kennzeichnung des Dokuments mit Angabe. soweit erforderlich. der maßgeblichen Teile | betrifft Anspruch |
|---|---|---|
| A | FR - A - 2 289 563 (MONTEDISON) | |
| A | CHEMICAL ABSTRACTS, Band 89, Nr. 14, 2. Oktober 1978, Seite 56, Nr. 111114x Columbus, Ohio, U.S.A. A. BALLISTRERI et al.: "Thermal decomposition products from mixtures of chlorinated paraffin with antimony(III) oxide and bismuth subcarbonate" & CHIM. IND. (MILAN) 1978, 60(6), 501-502 * Zusammenfassung * | |
| | -- | |
| DA | DE - B - 1 170 141 (BORG-WARNER) | |
| DA | DE - A - 1 810·993 (BORG-WARNER) | |
| DA | DE - A - 2 329 546 (BAYER) | |
| DA | DE - A - 2 329 548 (BAYER) | |
| | ---- | |

### KLASSIFIKATION DER ANMELDUNG (Int Cl )

C 08 L 69/00
        55/02
C 08 K  3/18

### RECHERCHIERTE SACHGEBIETE (Int Cl )

C 08 L 69/00
        55/02
C 08 K  3/18
        3/20
        3/22
        3/24
        3/26

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-05-1981 | STIENON |

EPA form 1503.1  06.78